# EUROPÄISCHE PATENTSCHRIFT

(11) **EP 3 288 781 B1**
(45) Veröffentlichungstag und Bekanntmachung des Hinweises auf die Patenterteilung: **19.06.2019**
(21) Anmeldenummer: 16701495.0
(22) Anmeldetag: 26.01.2016
(51) Int. Cl.: B60C 11/00, B29D 30/60

(54) **FAHRZEUGLUFTREIFEN MIT EINEM LAUFSTREIFEN**
PNEUMATIC VEHICLE TIRE HAVING A TREAD
PNEUMATIQUE DE VÉHICULE MUNI D'UNE BANDE DE ROULEMENT

(30) Priorität: 29.04.2015 DE 102015207937
(43) Veröffentlichungstag der Anmeldung: 07.03.2018
(73) Patentinhaber: Continental Reifen Deutschland GmbH, 30165 Hannover (DE)
(72) Erfinder: JABRI, Mohamed Aymen, 30167 Hannover (DE); PAVON SIERRA, Viktoria, 30419 Hannover (DE); KASTENS, Sven, 30890 Barsinghausen (DE)
(74) Vertreter: Finger, Karsten
(86) Internationale Anmeldenummer: PCT/EP2016/051478
(87) Internationale Veröffentlichungsnummer: WO 2016/173728

(56) Entgegenhaltungen:
- JP-A- 2009 000 871

## Beschreibung

Die Erfindung betrifft einen Fahrzeugluftreifen mit einem Laufstreifen, wobei der Laufstreifen einen radial außen angeordneten Laufstreifenabschnitt aufweist, wobei der Laufstreifenabschnitt einen Materialstreifen, welcher in etwa in Umfangsrichtung helixförmig in Windungen angeordnet ist, aufweist, wobei der Materialstreifen im Bereich des Laufstreifenabschnitts in seiner Längsrichtung zumindest zwei Schichten aufweist, wobei die erste Schicht aus einer ersten Kautschukmischung und die zweite Schicht aus einer dazu verschiedenen zweiten Kautschukmischung gebildet ist und wobei die erste Schicht und die zweite Schicht die radial äußere Oberfläche des Laufstreifenabschnitts mit der radial inneren Oberfläche des Laufstreifenabschnitts verbinden. Weiter betrifft die Erfindung ein Verfahren zur Herstellung eines solchen Fahrzeugluftreifens.

An den Laufstreifen eines Fahrzeugluftreifens werden unterschiedliche Anforderungen gestellt. Da dieser unmittelbaren Kontakt mit der Fahrbahn hat, ist es wesentlich, dass die radial äußere Oberfläche des Laufstreifens über die gesamte Nutzungsdauer vorteilhafte Eigenschaften bezüglich Haftung, Griff und Bremseigenschaften aufweist. Weiter sind gute Handlingeigenschaften sowie ein geringer Rollwiderstand von Vorteil. Bei Reifen, die unter winterlichen Fahrbedingungen eingesetzt werden sollen, sollen vorteilhafte Eigenschaften bzgl. Schneefahrverhalten, Eigenschaften auf trockener Fahrbahn, wie Trockenbremsen und Trockenfahrverhalten, Naßbremseigenschaften, Kurvensteifigkeit und Rollwiderstand sichergestellt sein.

Im Allgemeinen lassen sich Laufstreifen hinsichtlich dieser Eigenschaften nicht so ausführen, dass alle Eigenschaften gleichermaßen verbessert sind. Bekannt sind Reifen, deren Laufstreifenoberfläche Bereiche mit unterschiedlichen Kautschukmischungen aufweisen.

So ist aus der DE 11 2006 004 011 T5 ein Reifen bekannt, der einen radial außen angeordneten Bereich des Laufstreifens aufweist, der aus einem Materialstreifen aufweisend zwei Schichten aus unterschiedlichen Kautschukmischungen gebildet ist, wobei eine Mischung elektrisch leitfähig und die andere Mischung nicht elektrisch leitfähig ausgebildet ist. Der Volumenanteil an elektrisch leitfähiger Mischung des Materialstreifens ist hierbei in der axialen Mitte des Laufstreifens geringer als im Schulterbereich. Ein solcher Laufstreifens wird durch Wickeln eines extrudierten mehrschichtigen Materialstreifens geschaffen. Ein solcher Reifen soll bei kurzer Herstellungszykluszeit einen geringen Rollwiderstand sowie eine Funktion zur Beseitigung statischer Ladungen aufweisen.

Ein Reifen der eingangs genannten Art ist aus der EP 0 875 367 A2 bekannt. Hierbei erstreckt sich der Laufstreifenabschnitt über die gesamte axiale Breite des Laufstreifens und die Kautschukmischungen der beiden Schichten des Materialstreifens unterscheiden sich in ihrer Härte. Durch diese Kombination aus Kautschukmischungen unterschiedlicher Härte und somit mit unterschiedlichem Abriebverhalten soll der Reifen bei einfacher Herstellung eine vorteilhafte Haftung aufweisen. Kautschukmischungen mit geringer Härte weisen allerdings üblicherweise ein unvorteilhaftes Trockenfahrverhalten auf.

Ein gattungsgemäßer Reifen mit einem zweischichtigen Materialstreifen ist aus der JP 2009 000871 A bekannt. Auch hierbei unterscheiden sich die beiden Schichten in ihrer Härte. Der Erfindung liegt die Aufgabe zugrunde, einen Fahrzeugluftreifen zur Verfügung zu stellen, der ein vorteilhaftes Schneefahrverhalten bei gleichzeitig verbesserten Eigenschaften auf trockener Fahrbahn aufweist. Zudem soll der Reifen einfach herzustellen sein.

Gelöst wird die Aufgabe erfindungsgemäß dadurch, dass im vulkanisierten Zustand die zweite Kautschukmischung eine Shore-A-Härte aufweist, die um mindestens 2 Shore A, bevorzugt um 4 Shore A bis 12 Shore A, größer ist als die Shore-A-Härte der ersten Kautschukmischung, ermittelt bei Raumtemperatur gemäß DIN ISO 7619-1, und dass die erste und die zweite Kautschukmischung im vulkanisierten Zustand in etwa den gleichen Spannungswert, ermittelt bei 300% Dehnung bei Raumtemperatur gemäß DIN 53504, aufweisen.

Es hat sich herausgestellt, dass sich durch zwei Schichten, deren Kautschukmischungen sich um mindestens 2 Shore A, bevorzugt um 4 Shore A bis 12 Shore A, in ihrer Shore-A-Härte unterscheiden und gleichzeitig einen in etwa gleichen Spannungswert aufweisen, die Aufgabe gut lösen lässt. Die im Fahrbetrieb mit der Fahrbahn in Kontakt tretende radial äußere Oberfläche des Laufstreifenabschnitts wird durch den in etwa in Umfangsrichtung gewickelten Mischungsstreifen aufweisend zwei Schichten unterschiedlicher Kautschukmischung gebildet oder mitgebildet. Die Kontaktoberfläche ist somit aus Bereichen aus unterschiedlicher Kautschukmischung gebildet. Die beiden Kautschukmischungen der ersten und der zweiten Schicht unterscheiden sich dabei im vulkanisierten Zustand in ihrer Shore-A-Härte, wobei sich die erste Schicht mit ihrer geringeren Shore-A-Härte vorteilhaft auf das Schneefahrverhalten und die zweite Schicht mit ihrer größeren Shore-A-Härte vorteilhaft auf das Trockenfahrverhalten auswirkt.

Gleichzeitig weisen die erste und die zweite Kautschukmischung im vulkanisierten Zustand in etwa den gleichen Spannungswert bei 300% Dehnung und Raumtemperatur gemäß DIN 53504 auf. Unter in etwa gleichen Spannungswerten sind solche Spannungswerte zu verstehen, die um maximal 2%, bevorzugt um maximal 1%, voneinander abweichen, wobei der jeweils kleinere Wert als 100% genommen wird. Der Spannungswert dient als Maß für die semidynamische Steifigkeit. Ein solcher Fahrzeugluftreifen weist weiter verbesserte Eigenschaften auf trockener Fahrbahn auf. Ein Fahrzeugluftreifen aufweisend einen solchen Laufstreifen ist somit bezüglich des Zielkonflikts Schneefahrverhalten versus Eigenschaften auf trockener Fahrbahn verbessert, wodurch er sich insbesondere hervorragend für den Einsatz unter winterlichen Fahrbedingungen eignet.

Da sich beide Schichten über die radiale Erstreckung des Laufstreifenabschnitts erstrecken, ergeben sich die genannten Vorteile über die Abriebslebensdauer des Laufstreifenabschnitts. Da beide Schichten als ein Materialstreifen aufgebracht sind, zeichnet sich der Reifen zudem durch einen einfachen Herstellungsprozess und eine kurze Herstellungszykluszeit aus.

Bei erfindungsgemäß ausgeführten Fahrzeugluftreifen lässt sich durch besondere erfindungsgemäße Ausgestaltungen die eine oder andere Eigenschaft, insbesondere Schneefahrverhalten und Eigenschaften auf trockener Fahrbahn, besonders gut einstellen.

Für eine optimale Verbesserung der erwähnten Eigenschaften des Reifens ist es dabei vorteilhaft, wenn im vulkanisierten Zustand die erste Kautschukmischung eine Shore-A-Härte von 41 Shore A bis 65 Shore A und die zweite Kautschukmischung eine Shore-A-Härte von 49 Shore A bis 76 Shore A aufweist.

Bei einer vorteilhaften Ausführungsform der Erfindung weisen die beiden Kautschukmischungen einen Spannungswert von 3 MPa bis 7 MPa, ermittelt bei 300% Dehnung bei Raumtemperatur gemäß DIN 53504, auf. Diese Maßnahme bewirkt v.a. über die Verbesserung der Trockenbrems-Eigenschaften der zweiten Kautschukmischung ein verbessertes Trockenbremsen und somit verbesserte Eigenschaften auf trockener Fahrbahn des Fahrzeugluftreifens.

Bei einer anderen vorteilhaften Ausführungsform der Erfindung weisen die beiden Kautschukmischungen einen Spannungswert zwischen 7 MPa und 13 MPa, ermittelt bei 300% Dehnung bei Raumtemperatur gemäß DIN 53504, auf. Diese Maßnahme bewirkt v.a. über die Verbesserung des Trockenfahrverhaltens der ersten Kautschukmischung weiter verbesserte Eigenschaften auf trockener Fahrbahn.

Vorteilhaft ist es auch, wenn die Trennfläche zwischen erster Schicht und zweiter Schicht einen mittleren Neigungswinkel pro Windung von -80° bis 80° zur radialen Richtung des Fahrzeugluftreifens aufweist, wenn das Verhältnis des Volumens der ersten Schicht relativ zum Volumen der zweiten Schicht pro Windung 1:1 bis 10:1 beträgt und / oder wenn die mittlere Querschnittsdicke pro Windung der ersten Schicht und / oder die mittlere Querschnittsdicke pro Windung der zweiten Schicht 0,5 mm bis 5 mm, bevorzugt 0,5 mm bis 1 mm, beträgt. Der mittlere Neigungswinkel der Trennfläche ist beispielsweise durch den Grad der Überlappung benachbarter Windungen des Materialstreifens und/oder die Geometrie der Schichten innerhalb des Materialstreifens regelbar. Der mittlere Neigungswinkel pro Windung ist der gemäß arithmetischem Mittel über die Erstreckung der Trennfläche pro Windung gemittelte Winkel, den die Trennfläche mit der radialen Richtung einschließt. Auch die mittlere Querschnittsdicke pro Windung ist gemäß arithmetischem Mittel gemittelt. Eine Anisotropie in radialer Richtung und in axialer Richtung führt zu einer vorteilhaften Entkopplung der longitudinalen und lateralen Fahreigenschaften. Weiter zeichnet sich ein solcher Reifen durch eine verbesserte Laufstreifenstabilität aus.

Zweckmäßig ist es, wenn das Verhältnis des Volumens der ersten Schicht relativ zum Volumen der zweiten Schicht pro Windung des Materialstreifens nicht über die gesamte axiale Breite des Laufstreifens konstant ist sondern sich in axialer Richtung ändert. Dies ermöglicht eine vorteilhafte Verbesserung der Eigenschaften der Laufstreifenoberfläche gemäß den unterschiedlichen Anforderungen bezogen auf die axiale Breite des Reifens.

Eine besonders vorteilhafte Ausführungsform berücksichtigt die unterschiedlichen Anforderungen an die Laufstreifenoberfläche im Schulterbereich versus einem Bereich axial zwischen den Schulterbereichen, indem der Laufstreifen in zumindest einem Schulterbereich einen Laufstreifenabschnitt und axial innen bezüglich des Laufstreifenabschnittes einen radial außen angeordneten weiteren Abschnitt des Laufstreifens aufweist und indem die Volumendichte an zweiter Kautschukmischung in dem weiteren Abschnitt geringer ist als die Volumendichte an zweiter Kautschukmischung in dem Laufstreifenabschnitt, bevorzugt indem die Volumendichte an zweiter Kautschukmischung in dem weiteren Abschnitt gleich 0 ist. Bevorzugt weisen beide Schulterbereiche einen solchen Laufstreifenabschnitt auf. Bevorzugt zeichnet sich die zweite Kautschukmischung bezüglich von vor allem im Schulterbereich wichtigen Eigenschaften wie Rollwiderstand und Eigenschaften auf trockener Fahrbahn und die erste Kautschukmischung bezüglich von vor allem im Mittenbereich wichtigen Eigenschaften wie Bremseigenschaften aus. Dabei kann ein Materialstreifen sowohl den oder die Laufstreifenabschnitte als auch den weiteren Laufstreifenabschnitt bilden oder mitbilden.

Eine vorteilhafte Entkopplung zwischen den longitudinalen und lateralen Fahreigenschaften unter Berücksichtigung der sich in axialer Richtung ändernden Anforderungen ergibt sich, wenn sich innerhalb des Laufstreifenabschnittes der mittlere Neigungswinkel pro Windung, den die Trennfläche zwischen erster Schicht und zweiter Schicht des Materialstreifens mit der radialen Richtung einschließt, in axialer Richtung ändert. Bevorzugt ist es dabei, wenn der mittlere Neigungswinkel pro Windung von axial innen nach axial außen dem Betrag nach zunimmt. Ein solcher Fahrzeugluftreifen mit größerer Neigung im Schulterbereich verglichen zu axial inneren Bereichen weist ein noch besseres Fahrverhalten auf.

Eine besonders vorteilhafte Entkopplung zwischen den longitudinalen und lateralen Fahreigenschaften unter Berücksichtigung der sich in axialer Richtung ändernden Anforderungen ergibt sich, wenn der Laufstreifen in jedem Schulterbereich einen Laufstreifenabschnitt aufweist und wenn sich die beiden Laufstreifenabschnitte durch das Vorzeichen ihrer mittleren Neigungswinkel pro Windung, den die Trennflächen zwischen erster Schicht und zweiter Schicht des jeweiligen Materialstreifens mit der radialen Richtung einschließen, unterscheiden, bevorzugt wenn die mittleren Neigungswinkel pro Windung von axial innen nach axial außen dem Betrag nach zunehmen.

Ein positives Fahrverhalten, insbesondere ein besonders positives Kurvenfahrverhalten, ergibt sich auch, wenn der Laufstreifen in jedem Schulterbereich einen Laufstreifenabschnitt aufweist und wenn sich die beiden Laufstreifenabschnitte durch das Vorzeichen ihrer mittleren Neigungswinkel pro Windung, den die Trennflächen zwischen erster Schicht und zweiter Schicht des jeweiligen Materialstreifens mit der radialen Richtung einschließen, unterscheiden. Die beiden Laufstreifenabschnitte können dabei durch den gleichen Materialstreifen gebildet oder mitgebildet sein. Bevorzugt weist der Bereich axial zwischen den beiden Laufstreifenabschnitten keine oder weniger Kautschukmischung pro Windung auf als in den beiden Laufstreifenabschnitten.

Eine Verbesserung bezüglich drei oder mehr Eigenschaften wird erlangt, wenn der Materialstreifen eine dritte Schicht aus einer zur ersten und zur zweiten Kautschukmischung verschiedenen Kautschukmischung aufweist. Die dritte Schicht kann aber muss nicht am Laufstreifen im Bereich des Laufstreifenabschnitts angeordnet sein. Vorteilhaft ist es, wenn die erste Kautschukmischung eine übliche Cap-Mischung ist, die zweite Kautschukmischung eine übliche Base-Mischung ist und die hierzu verschiedene Kautschukmischung der dritten Schicht eine Kautschukmischung mit vorteilhaften Rollwiderstandseigenschaften ist.

Zweckmäßig ist es, wenn der Laufstreifen einen Materialstreifen mit elektrisch leitfähigem Material aufweist, wobei das elektrisch leitfähige Material die Laufstreifenoberfläche mit einem radial innerhalb des Materialstreifens angeordneten elektrisch leitfähigen Bauteil elektrisch leitfähig verbindet. Hierdurch ist ein elektrisch leitfähiger Pfad zur Ableitung statischer Ladung Laufstreifenoberfläche nach radial innen geschaffen.

Für einen einfachen Herstellungsprozess mit geringer Zykluszeit ist es vorteilhaft, wenn sich der Materialstreifen über zumindest 80% der axialen Breite, bevorzugt über die gesamte axiale Breite, des Laufstreifens erstreckt. Der Materialstreifen kann dabei mehrere Laufstreifenabschnitte umfassen.

In einer zweckmäßigen Ausführungsform der Erfindung erstreckt sich der Laufstreifenabschnitt über die gesamte radiale Erstreckung des Laufstreifens. In einer anderen zweckmäßigen Ausführungsform bildet der Laufstreifenabschnitt zumindest einen Teil der Laufstreifen-Cap und erstreckt sich nur über einen Teil der radialen Erstreckung des Laufstreifens, welcher in radialer Richtung eine radial außen angeordnete Cap-Schicht und eine hierzu radial innen liegende Base-Schicht aufweist.

Erfindungsgemäß ausgeführte Fahrzeugluftreifen eignen sich insbesondere als Reifen für Personenkraftwagen (PKW), Vans, Nutzfahrzeuge, Industriefahrzeuge oder Motorräder, insbesondere für PKW für den Einsatz unter winterlichen Fahrbedingungen.

Ein besonders einfaches und vorteilhaftes Verfahren zur Herstellung eines erfindungsgemäßen Fahrzeugluftreifens ist dadurch gegeben, dass zum Ausbilden des radial außen angeordneten Laufstreifenabschnittes ein Materialstreifen in etwa helixförmig in der Umfangsrichtung des Fahrzeugluftreifens aufgewickelt wird, dass der Materialstreifen die erste und die zweite Schicht umfasst und dass der mehrschichtige Materialstreifen durch Koextrusion als ein Materialstreifen extrudiert wird oder mittels Schneidens und durch Zusammenfügen der hierdurch erhaltenen Stücke einer kalandrierten Mehrmischungsbahn erzeugt wird. Ein solches Herstellungsverfahren gewährleistet auch bei geringer Dicke der Schichten des Materialstreifens einen qualitativ hochwertigen Laufstreifenabschnitt. Zudem ist zeichnet sich das Verfahren durch das Wickeln des mehrschichtigen Materialstreifens durch eine geringe Zykluszeit aus.

Weitere Merkmale, Vorteile und Einzelheiten der Erfindung werden nun anhand der schematischen Zeichnungen, die Ausführungsbeispiele darstellen, erläutert. Dabei zeigt die
Fig. 1 einen Teilquerschnitt durch den Laufstreifenbereich eines Fahrzeugluftreifens mit einer Ausführungsform der Erfindung,
Fig. 2 bis Fig. 6 schematisch jeweils eine erfindungsgemäße Ausführungsform des Laufstreifens.

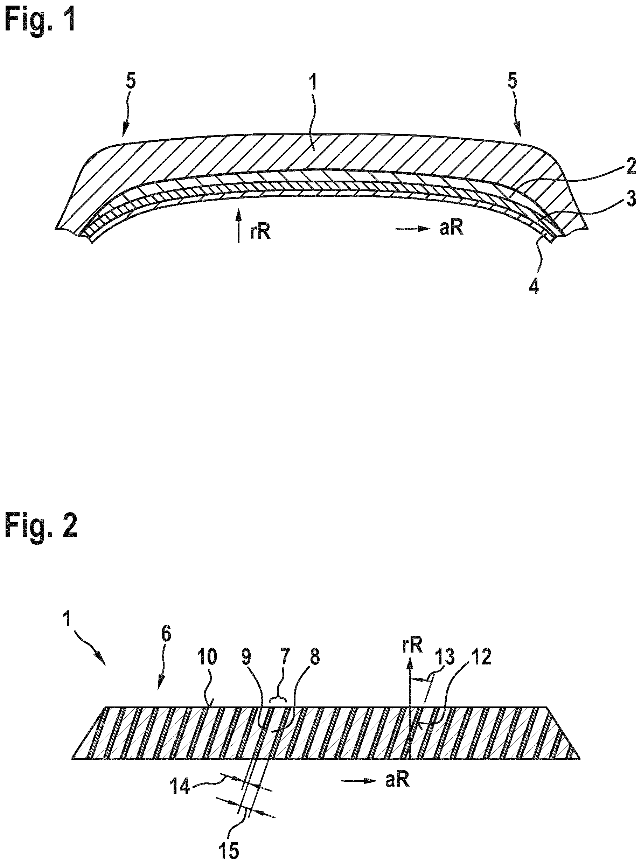

In Fig. 1 ist beispielhaft und schematisch ein Teilquerschnitt eines PKW-Reifens dargestellt. Zu den üblichen Bauteilen des Reifens gehören insbesondere ein Laufstreifen 1, ein radial innerhalb des Laufstreifens 1 angeordneter Gürtelverband 2 bestehend aus mehreren Gürtellagen und optional einer Gürtelbandage, ferner eine Radialkarkasse 3, eine weitgehend luftdichte Innenschicht 4 sowie nicht dargestellte Seitenwände sowie Wulstbereiche mit Wulstkernen, Kernprofilen und weiteren gegebenenfalls in den Wulstbereichen vorgesehenen Verstärkungslagen. Der Laufstreifen 1 ist insbesondere in an sich bekannter Weise mit einer Profilierung versehen, die nicht dargestellt ist.

Der Laufstreifen 1 verläuft über die Breite des Reifens in der Bodenaufstandsfläche hinaus und läuft in den Schulterbereichen 5 aus. Schulterseitig können aus der Seitenwandmischung bestehende Laufstreifenauslaufbereiche vorgesehen sein.

Die Figuren 2 bis 6 zeigen schematisch jeweils eine erfindungsgemäße Ausführungsform des Laufstreifens. Die Ausführungsformen eignen sich für einen Laufstreifen 1 eines wie in Fig. 1 dargestellten PKW-Reifens, insbesondere für einen PKW-Reifen für den Einsatz unter winterlichen Fahrbedingungen.

Die in den Figuren 2 bis 6 dargestellten Laufstreifen 1 weisen jeweils einen radial außen angeordneten Laufstreifenabschnitt 6 auf, wobei der Laufstreifenabschnitt 6 einen Materialstreifen 7 aufweist, welcher in etwa in Umfangsrichtung helixförmig in Windungen angeordnet ist. Der Materialstreifen 7 weist im Bereich des Laufstreifenabschnitts 6 in seiner Längsrichtung zumindest zwei Schichten 8, 9 aufweist, wobei die erste Schicht 8 aus einer ersten Kautschukmischung und die zweite Schicht 9 aus einer dazu verschiedenen zweiten Kautschukmischung gebildet ist,
wobei die erste Schicht 8 und die zweite Schicht 9 die radial äußere Oberfläche 10 des Laufstreifenabschnitts 6 mit der radial inneren Oberfläche 11 des Laufstreifenabschnitts 6 verbinden.

Die Shore-A-Härte der ersten Kautschukmischung beträgt in vulkanisiertem Zustand 41 Shore A bis 65 Shore A, die Shore-A-Härte der zweiten Kautschukmischung beträgt in vulkanisiertem Zustand 49 Shore A bis 76 Shore A, ermittelt bei Raumtemperatur gemäß DIN ISO 7619-1. Die Shore-A-Härten der beiden Kautschukischungen weichen dabei um 4 Shore A bis 12 Shore A voneinander ab. Weiter weisen die erste und die zweite Kautschukmischung im vulkanisierten Zustand in etwa den gleichen Spannungswert, ermittelt bei 300% Dehnung bei Raumtemperatur gemäß DIN 53504, auf.

Die in den Figuren 2 bis 6 gezeigten Laufstreifen 1 weisen in einer jeweils ersten Ausführungsform in ihrer ersten Schicht und in ihrer zweiten Schicht Kautschukmischungen mit jeweils einem Spannungswert, ermittelt bei 300% Dehnung bei Raumtemperatur gemäß DIN 53504, von 3 MPa bis 7 MPa, auf.

Die in den Figuren 2 bis 6 gezeigten Laufstreifen 1 weisen in einer jeweils zweiten Ausführungsform in ihrer ersten Schicht und in ihrer zweiten Schicht Kautschukmischungen mit jeweils einem Spannungswert, ermittelt bei 300% Dehnung bei Raumtemperatur gemäß DIN 53504, zwischen 7 MPa und 13 MPa auf.

Die dargestellten Laufstreifen 1 werden zumindest zum Teil dadurch erzeugt, dass zum Ausbilden des radial außen angeordneten Laufstreifenabschnittes 6 ein Materialstreifen 7 in etwa helixförmig in der Umfangsrichtung des Fahrzeugluftreifens aufgewickelt wird, wobei der Materialstreifen 7 die erste 8 und die zweite Schicht 9 umfasst. Der mehrschichtige Materialstreifen 7 ist dabei insbesondere durch Koextrusion als ein Materialstreifen extrudiert oder mittels Schneidens und Zusammenfügens der so erhaltenen Teile einer kalandrierten Mehrmischungsbahn erzeugt.

Die Fig. 2 zeigt einen Laufstreifen 1, der durch einen in Umfangsrichtung helixförmig in Windungen angeordneten Materialstreifen 7 gebildet ist, wobei der Materialstreifen 7 über seine gesamte Länge zweischichtig ausgebildet ist. Der Materialstreifen 7 erstreckt sich über die gesamte axiale Breite des Laufstreifens 1, der Laufstreifenabschnitt 6 erstreckt sich im Wesentlichen über die gesamte axiale Breite des Laufstreifens 1.

Die Trennfläche 12 zwischen erster Schicht 8 und zweiter Schicht 9 weist einen mittleren Neigungswinkel 13 pro Windung von -80° bis 80° zur radialen Richtung rR des Fahrzeugluftreifens aufweist. Weiter beträgt das Verhältnis des Volumens der ersten Schicht 8 relativ zum Volumen der zweiten Schicht 9 pro Windung 1:1 bis 10:1 und die mittlere Querschnittsdicke 14 pro Windung der ersten Schicht 8 und / oder die mittlere Querschnittsdicke 15 pro Windung der zweiten Schicht 9 beträgt 0,5 mm bis 1 mm.

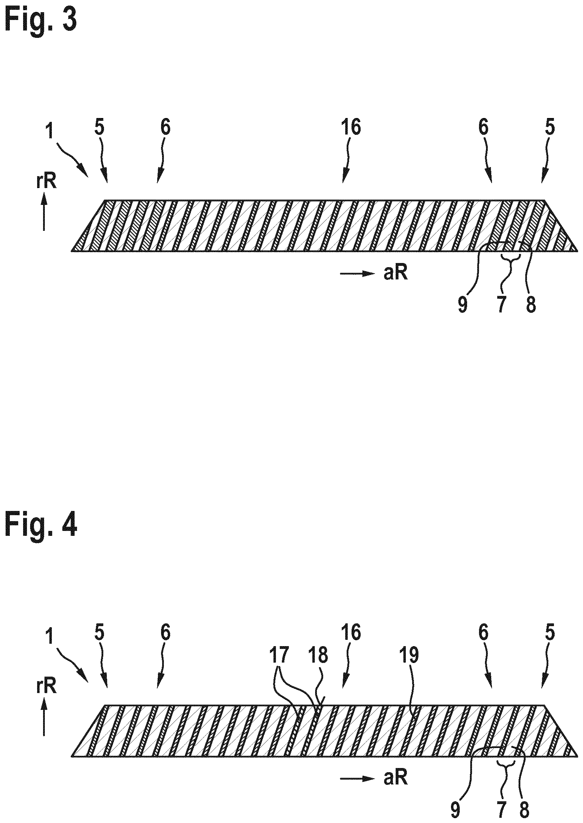

Die Figuren 3 und 4 zeigen jeweils einen Laufstreifen 1, der in beiden Schulterbereichen 5 jeweils einen Laufstreifenabschnitt 6 und axial innen bezüglich der Laufstreifenabschnitte 6 einen radial außen angeordneten weiteren Abschnitt 16 des Laufstreifens 1 aufweist, wobei die Volumendichte an zweiter Kautschukmischung in dem weiteren Abschnitt 16 geringer ist als die Volumendichte an zweiter Kautschukmischung in den Laufstreifenabschnitten 6.

Das in der Fig. 3 gezeigte Ausführungsbeispiel weist dabei auch im weiteren Abschnitt 16 die zweite Kautschukmischung auf. Die Abschnitte 6 und 16 sind insbesondere aus einem einzigen Materialstreifen 7 gebildet, wobei sich das Verhältnis des Volumens der ersten Schicht 8 einer Windung relativ zum Volumen der zweiten Schicht 9 der Windung des Materialstreifens 7 in axialer Richtung ändert.

In dem in der Fig. 4 gezeigten Ausführungsbeispiel ist die Volumendichte an zweiter Kautschukmischung im weiteren Abschnitt 16 gleich 0. Die Schicht 19 ist somit aus einer zur ersten Kautschukmischung verschiedenen Kautschukmischung gebildet. Der weitere Abschnitt 16 weist insbesondere einen Materialstreifen mit elektrisch leitfähigem Material 17 auf, wobei das elektrisch leitfähige Material 17 die Laufstreifenoberfläche 18 mit einem radial innerhalb des Materialstreifens angeordneten elektrisch leitfähigen Bauteil elektrisch leitfähig verbindet. Die Abschnitte 6 und 16 sind insbesondere aus verschiedenen Materialstreifen gebildet. Die Abschnitte 6 und 16 können aber auch aus einem Materialstreifen gebildet sein, dessen zweite Schicht im Bereich des Abschnitts 16 nicht aus der zweiten Kautschukmischung sondern aus einer hiervor verschiedenen Kautschukmischung gebildet ist, insbesondere aus der ersten Kautschukmischung und / oder aus elektrisch leitfähigem Material 17 gebildet ist.

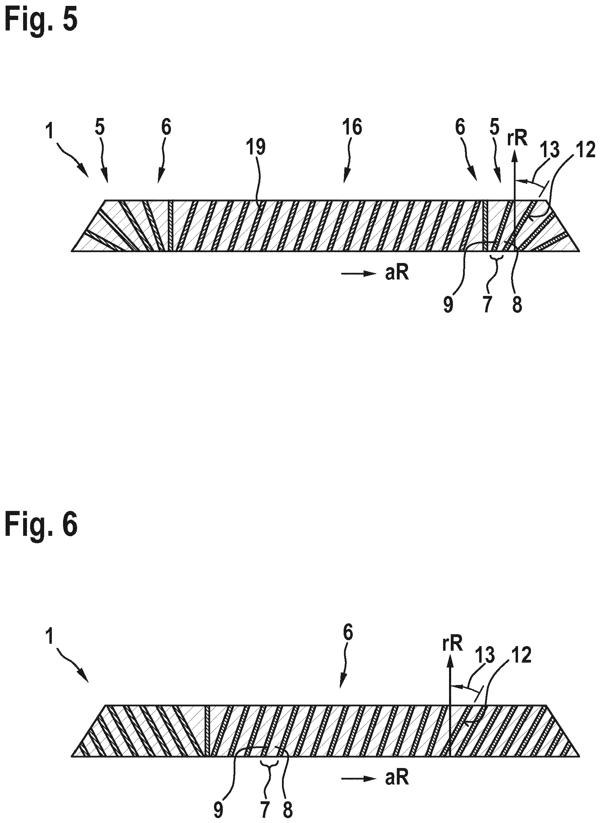

Die Figuren 5 und 6 zeigen jeweils einen Laufstreifen 1 mit zumindest einem Laufstreifenabschnitt 6, wobei sich innerhalb des Laufstreifenabschnittes 6 der mittlere Neigungswinkel 13 pro Windung, den die Trennfläche 12 zwischen erster Schicht 8 und zweiter Schicht 9 des Materialstreifens 7 mit der radialen Richtung einschließt, in axialer Richtung ändert. Weiter unterscheiden sich die beiden Schulterbereiche zumindest durch das Vorzeichen der mittleren Neigungswinkel 13 pro Windung, den die Trennflächen 12 zwischen erster Schicht 8 und zweiter Schicht 9 des jeweiligen Materialstreifens 7 mit der radialen Richtung einschließen.

Der in der Fig. 5 dargestellte Laufstreifen 1 unterscheidet sich dabei von dem in der Fig. 4 dargestellten Laufstreifen 1 im Wesentlichen dadurch, dass innerhalb der in den Schulterbereichen 5 angeordnete Laufstreifenabschnitte 6 der mittlere Neigungswinkel 13 pro Windung von axial innen nach axial außen dem Betrag nach zunimmt und dass sich die beiden Laufstreifenabschnitte 6 durch das Vorzeichen ihrer mittleren Neigungswinkel 13 pro Windung, den die Trennflächen 12 zwischen erster Schicht 8 und zweiter Schicht 9 des jeweiligen Materialstreifens 7 mit der radialen Richtung einschließen, unterscheiden.

Der in der Fig. 6 dargestellte Laufstreifen 1 ist insbesondere aus einem Materialstreifen 7 gebildet.

Der in den Figuren 2 bis 6 dargestellte Laufstreifen 1 kann im wesentlichen den gesamten Laufstreifen eines Fahrzeugluftreifens oder einen radial äußeren Bereich des Laufstreifens, insbesondere die sogenannte Cap-Schicht, bilden oder mitbilden.

Die nachfolgenden Tabellen 1 und 2 enthalten Beispiele von Kautschukmischungszusammensetzungen M1₁ und M2₁ für die erste Schicht 8 und Kautschukmischungszusammensetzungen M1₂ und M2₂ für die zweite Schicht 9 des Mischungsstreifens 7. Ein solcher Mischungsstreifen 7 eignet sich insbesondere als Mischungsstreifen 7 der in den Figuren 2 bis 6 dargestellten Laufstreifen 1. Die Mengenangaben sind in der in der Kautschuktechnologie üblichen Einheit phr (parts per hundred rubber) angegeben. Die Mengenangaben beziehen sich jeweils auf die Massenanteile des Grundpolymers bzw. bei Polymerblends auf jene der Grundpolymere. Angegeben ist auch die physikalischen Eigenschaften Shore-A-Härte, ermittelt bei Raumtemperatur gemäß DIN ISO 7619-1, sowie Spannungswert, ermittelt bei 300% Dehnung bei Raumtemperatur gemäß DIN 53504.

**Tabelle 1**

| **Bestandteile** | **Einheit** | **M1₁** | **M1₂** |
|---|---|---|---|
| NR ^{a)} | phr | 20 | 5 |
| BR ^{b)} | phr | 50 | 27 |
| SBR ^{c)} | phr | 41,25 | |
| SBR ^{d)} | phr | | 68 |
| Kieselsäure ^{e)} | phr | 85 | 85 |
| Ruß N 399 | phr | 14 | 14 |
| Weichmacher ^{f)} | phr | 34 | 49 |
| Silan ^{g)} | phr | 6 | 6,2 |
| Sonst. Zus. ^{h)} | phr | 16,7 | 16,7 |
| S und Beschleuniger ⁱ⁾ | phr | 5,9 | 5,9 |

| **Physikalische Eigenschaften** | | | |
|---|---|---|---|
| Shore-A-Härte | Shore A | 57 | 63 |
| Spannungswert | MPa | 5,9 | 5,9 |

| | | | |
|---|---|---|---|
| Verwendete Substanzen ^{a)} Naturkautschuk TSR ^{b)} BR: BUNA CB 24, Fa. Lanxess ^{c)} SBR: Buna VSL 5025-2, Fa. Lanxess ^{d)} SBR: Sprintan™ SLR 3402, Fa. Styron ^{e)} Kieselsäure Ultrasil VN3, Fa. Evonik ^{f)} Weichmacher Vivatec C500, Fa. Thai Base Public Company Ltd. ^{g)} Silan Si263, Fa. Evonik ^{h)} Sonstige Zusatzstoffe: Alterungsschutzmittel 6PPD, Zinkoxid, Stearinsäure ⁱ⁾ Schwefel und Beschleuniger CBS | | | |

**Tabelle 2**

| **Bestandteile** | **Einheit** | **M2₁** | **M2₂** |
|---|---|---|---|
| NR ^{a)} | phr | 10 | 10 |
| BR ^{b)} | phr | 67 | 33 |
| SBR ^{c)} | phr | 23 | 57 |
| Kieselsäure ^{d)} | phr | 103 | 103 |
| Ruß N 399 | phr | 5 | 5 |
| Weichmacher ^{e)} | phr | 57,3 | 41,3 |
| Silan ^{f)} | phr | 8,5 | 8,5 |
| Sonst. Zus. ^{g)} | phr | 16,7 | 16,7 |
| S und Beschleuniger ^{h)} | phr | 9,83 | 9,83 |

| **Physikalische Eigenschaften** | | | |
|---|---|---|---|
| Shore-A-Härte | Shore A | 65 | 72 |
| Spannungswert | MPa | 10 | 10 |

| | | | |
|---|---|---|---|
| Verwendete Substanzen ^{a)} Naturkautschuk TSR ^{b)} BR: BUNA CB 24, Fa. Lanxess ^{c)} SBR: Sprintan™ SLR 3402, Fa. Styron ^{d)} Kieselsäure Zeosil® 1165 MP, Fa. Rhodia ^{e)} Weichmacher Vivatec C500, Fa. Thai Base Public Company Ltd. ^{f)} Silan Si263, Fa. Evonik ^{g)} Sonstige Zusatzstoffe: Alterungsschutzmittel 6PPD, Zinkoxid, Stearinsäure ^{h)} Schwefel und Beschleuniger CBS | | | |

### Bezugszeichenliste

### (Teil der Beschreibung)

- 1: Laufstreifen
- 2: Gürtelverband
- 3: Radialkarkasse
- 4: Innenschicht
- 5: Schulterbereich
- 6: Laufstreifenabschnitt
- 7: Materialstreifen
- 8: erste Schicht
- 9: zweite Schicht
- 10: radial äußere Oberfläche des Laufstreifenabschnitts
- 11: radial innere Oberfläche des Laufstreifenabschnitts
- 12: Trennfläche
- 13: Neigungswinkel
- 14: mittlere Querschnittsdicke der ersten Schicht
- 15: mittlere Querschnittsdicke der zweiten Schicht
- 16: weiterer Abschnitt des Laufstreifens
- 17: elektrisch leitfähiges Material
- 18: Laufstreifenoberfläche
- 19: Schicht

## Patentansprüche

1. Fahrzeugluftreifen mit einem Laufstreifen,
• wobei der Laufstreifen (1) einen radial außen angeordneten Laufstreifenabschnitt (6) aufweist,
• wobei der Laufstreifenabschnitt (6) einen Materialstreifen (7), welcher in etwa in Umfangsrichtung helixförmig in Windungen angeordnet ist, aufweist,
• wobei der Materialstreifen (7) im Bereich des Laufstreifenabschnitts (6) in seiner Längsrichtung zumindest zwei Schichten (8,9) aufweist,
• wobei die erste Schicht (8) aus einer ersten Kautschukmischung und die zweite Schicht (9) aus einer dazu verschiedenen zweiten Kautschukmischung gebildet ist,
• wobei die erste Schicht (8) und die zweite Schicht (9) die radial äußere Oberfläche (10) des Laufstreifenabschnitts (6) mit der radial inneren Oberfläche (11) des Laufstreifenabschnitts (6) verbinden und
• wobei im vulkanisierten Zustand die zweite Kautschukmischung eine Shore-A-Härte aufweist, die um mindestens 2 Shore A, bevorzugt um 4 Shore A bis 12 Shore A, größer ist als die Shore-A-Härte der ersten Kautschukmischung, ermittelt bei Raumtemperatur gemäß DIN ISO 7619-1,
**dadurch gekennzeichnet, dass**
• die erste Kautschukmischung und die zweite Kautschukmischung im vulkanisierten Zustand Spannungswerte, ermittelt bei 300% Dehnung bei Raumtemperatur gemäß DIN 53504, aufweisen, die um maximal 2% voneinander abweichen, wobei der jeweils kleinere Wert als 100% angenommen wird.

2. Fahrzeugluftreifen nach Anspruch 1, **dadurch gekennzeichnet, dass** im vulkanisierten Zustand die erste Kautschukmischung eine Shore-A-Härte von 41 Shore A bis 65 Shore A und die zweite Kautschukmischung eine Shore-A-Härte von 49 Shore A bis 76 Shore A aufweist.

3. Fahrzeugluftreifen nach zumindest einem der vorangehenden Ansprüche, **dadurch gekennzeichnet, dass** die erste Kautschukmischung und die zweite Kautschukmischung jeweils einen Spannungswert von 3 MPa bis 7 MPa, ermittelt bei 300% Dehnung bei Raumtemperatur gemäß DIN 53504, aufweisen.

4. Fahrzeugluftreifen nach zumindest einem der vorangehenden Ansprüche, **dadurch gekennzeichnet, dass** die erste Kautschukmischung und die zweite Kautschukmischung jeweils einen Spannungswert zwischen 7 MPa und 13 MPa, ermittelt bei 300% Dehnung bei Raumtemperatur gemäß DIN 53504, aufweisen.

5. Fahrzeugluftreifen nach zumindest einem der vorangehenden Ansprüche, **dadurch gekennzeichnet, dass**
innerhalb des Laufstreifenabschnitts (6) gilt, dass die Trennfläche (12) zwischen erster Schicht (8) und zweiter Schicht (9) einen mittleren Neigungswinkel (13) pro Windung von -80° bis 80° zur radialen Richtung rR des Fahrzeugluftreifens aufweist, dass das Verhältnis des Volumens der ersten Schicht (8) relativ zum Volumen der zweiten Schicht (9) pro Windung 1:1 bis 10:1 beträgt und / oder dass die mittlere Querschnittsdicke (14) pro Windung der ersten Schicht (8) und / oder die mittlere Querschnittsdicke (15) pro Windung der zweiten Schicht (9) 0,5 mm bis 5 mm, bevorzugt 0,5 mm bis 1 mm, beträgt.

6. Fahrzeugluftreifen nach zumindest einem der vorangehenden Ansprüche, **dadurch gekennzeichnet, dass**
der Laufstreifen (1) in einem oder in beiden Schulterbereichen (5) einen Laufstreifenabschnitt (6) und axial innen bezüglich des Laufstreifenabschnittes (6) (6) einen radial außen angeordneten weiteren Abschnitt (16) des Laufstreifens (1) aufweist, und dass die Volumendichte an zweiter Kautschukmischung in dem weiteren Abschnitt (16) geringer ist als die Volumendichte an zweiter Kautschukmischung in dem Laufstreifenabschnitt (6), bevorzugt dass die Volumendichte an zweiter Kautschukmischung in dem weiteren Abschnitt (16) gleich 0 ist.

7. Fahrzeugluftreifen nach zumindest einem der vorangehenden Ansprüche, **dadurch gekennzeichnet, dass**
sich innerhalb des Laufstreifenabschnittes (6) der mittlere Neigungswinkel (13) pro Windung, den die Trennfläche (12) zwischen erster Schicht (8) und zweiter Schicht (9) des Materialstreifens mit der radialen Richtung rR einschließt, in axialer Richtung aR ändert, bevorzugt dass der mittlere Neigungswinkel (13) pro Windung von axial innen nach axial außen dem Betrag nach zunimmt.

8. Fahrzeugluftreifen nach zumindest einem der vorangehenden Ansprüche, **dadurch gekennzeichnet, dass**
der Laufstreifen (1) in jedem Schulterbereich (5) einen Laufstreifenabschnitt (6) aufweist und dass sich die beiden Laufstreifenabschnitte (6) durch das Vorzeichen ihrer mittleren Neigungswinkel (13) pro Windung, den die Trennfläche (12) zwischen erster Schicht (8) und zweiter Schicht (9) des jeweiligen Materialstreifens (7) mit der radialen Richtung rR einschließen, unterscheiden.

9. Fahrzeugluftreifen nach zumindest einem der vorangehenden Ansprüche, **dadurch gekennzeichnet, dass**
der Materialstreifen (7) eine dritte Schicht aus einer zur ersten Kautschukmischung und zur zweiten Kautschukmischung verschiedenen Kautschukmischung aufweist.

10. Fahrzeugluftreifen nach zumindest Anspruch 9, **dadurch gekennzeichnet, dass** sich der Materialstreifen (7) über zumindest 80% der axialen Breite, bevorzugt über die gesamte axiale Breite, des Laufstreifens (1) erstreckt.

11. Verfahren zur Herstellung eines Fahrzeugluftreifens gemäß zumindest einem der vorangehenden Ansprüche, wobei zum Ausbilden des radial außen angeordneten Laufstreifenabschnittes (6) ein Materialstreifen (7) in etwa helixförmig in der Umfangsrichtung des Fahrzeugluftreifens aufgewickelt wird, wobei der Materialstreifen (7) die erste Schicht (8) und die zweite Schicht (9) umfasst und wobei der mehrschichtige Materialstreifen (7) durch Koextrusion als ein Materialstreifen (7) extrudiert wird oder mittels Schneidens einer kalandrierten Mehrmischungsbahn erzeugt wird.

## Claims

1. Pneumatic vehicle tyre having a tread,
• wherein the tread (1) has a tread segment (6) that is arranged radially on the outside,
• wherein the tread segment (6) has a material strip (7) that is arranged helically in windings approximately in the circumferential direction,
• wherein, in the region of the tread segment (6), the material strip (7) has at least two layers (8, 9) in the longitudinal direction of the material strip,
• wherein the first layer (8) is formed from a first rubber compound and the second layer (9) is formed from a second rubber compound, different from the first,
• wherein the first layer (8) and the second layer (9) connect the radially outer surface (10) of the tread segment (6) to the radially inner surface (11) of the tread segment (6) and
• wherein in the vulcanized state, the second rubber compound has a Shore A hardness that is greater than the Shore A hardness of the first rubber compound by at least 2 Shore A, preferably by 4 Shore A̅ to 12 Shore A, determined at room temperature in accordance with DIN ISO 7619-1,
**characterized in that,**
• in the vulcanized state, the first and the second rubber compounds have stress values, determined at 300% elongation at room temperature in accordance with DIN 53504, which differ by at most 2% from one another, wherein the respectively lower value is taken as 100%.

2. Pneumatic vehicle tyre according to Claim 1, **characterized in that**,
in the vulcanized state, the first rubber compound has a Shore A hardness of 41 Shore A to 65 Shore A and the second rubber compound has a Shore A hardness of 49 Shore A to 76 Shore A.

3. Pneumatic vehicle tyre according to at least one of the preceding claims, **characterized in that** the first and second rubber compounds each have a stress value of 3 MPa to 7 MPa, determined at 300% elongation at room temperature in accordance with DIN 53504.

4. Pneumatic vehicle tyre according to at least one of the preceding claims, **characterized in that** the first and second rubber compounds each have a stress value of between 7 MPa and 13 MPa, determined at 300% elongation at room temperature in accordance with DIN 53504.

5. Pneumatic vehicle tyre according to at least one of the preceding claims, **characterized in that**,
within the tread segment (6), it is the case that the interface (12) between the first layer (8) and the second layer (9) has a mean slope angle (13) per winding of -80° to 80° to the radial direction rR of the pneumatic vehicle tyre, **in that** the ratio of the volume of the first layer (8) relative to the volume of the second layer (9) per winding is 1:1 to 10:1 and/or **in that** the mean cross-sectional thickness (14) per winding of the first layer (8) and/or the mean cross-sectional thickness (15) per winding of the second layer (9) is 0.5 mm to 5 mm, preferably 0.5 mm to 1 mm.

6. Pneumatic vehicle tyre according to at least one of the preceding claims, **characterized in that**,
in one or in both shoulder regions (5), the tread (1) has a tread segment (6) and, axially to the inside relative to the tread segment (6) (6), a further segment (16), arranged radially on the outside, of the tread (1), and **in that** the volume density of second rubber compound in the further segment (16) is lower than the volume density of second rubber compound in the tread segment (6), preferably **in that** the volume density of second rubber compound in the further segment (16) is equal to 0.

7. Pneumatic vehicle tyre according to at least one of the preceding claims, **characterized in that**,
within the tread segment (6), the mean slope angle (13) per winding that is enclosed by the interface (12) between the first layer (8) and the second layer (9) of the material strip and the radial direction rR changes in the axial direction aR, preferably **in that** the mean slope angle (13) per winding increases in magnitude from axially on the inside to axially on the outside.

8. Pneumatic vehicle tyre according to at least one of the preceding claims, **characterized in that**
the tread (1) has a tread segment (6) in each shoulder region (5), and **in that** the two tread segments (6) differ in the sign of the mean slope angle (13) thereof per winding that is enclosed by the interface (12) between the first layer (8) and the second layer (9) of the respective material strip (7) and the radial direction rR.

9. Pneumatic vehicle tyre according to at least one of the preceding claims, **characterized in that** the material strip (7) has a third layer composed of a rubber compound different from the first and second rubber compounds.

10. Pneumatic vehicle tyre according to at least claim 9, **characterized in that**
the material strip (7) extends over at least 80% of the axial width, preferably over the entyre axial width, of the tread (1).

11. Method for producing a pneumatic vehicle tyre according to at least one of the preceding claims, wherein, to form the tread segment (6) arranged radially on the outside, a material strip (7) is wound on approximately helically in the circumferential direction of the pneumatic vehicle tyre, wherein the material strip (7) comprises the first layer (8) and the second layer (9), and wherein the multilayer material strip (7) is extruded by coextrusion as a material strip (7) or produced by cutting a calendered multi-compound web.

## Revendications

1. Pneumatique de véhicule muni d'une bande de roulement,
• dans lequel la bande de roulement (1) présente une partie de bande de roulement (6), située radialement à l'extérieur,
• dans lequel la partie de bande de roulement (6) présente une bande de matière (7), qui est disposée en spires en forme d'hélice sensiblement dans la direction périphérique,
• dans lequel la bande de matière (7) présente au moins deux couches (8, 9) dans sa direction longitudinale dans la région de la partie de bande de roulement (6),
• dans lequel la première couche (8) est formée d'un premier mélange de caoutchouc et la deuxième couche (9) est formée d'un deuxième mélange de caoutchouc différent de celui-ci,
• dans lequel la première couche (8) et la deuxième couche (9) relient la surface radialement extérieure (10) de la partie de bande de roulement (6) à la surface radialement intérieure (11) de la partie de bande de roulement (6), et
• dans lequel, dans l'état vulcanisé, le deuxième mélange de caoutchouc présente une dureté Shore A, qui est supérieure d'au moins 2 Shore A, de préférence de 4 Shore A à 12 Shore A, à la dureté Shore A du premier mélange de caoutchouc, déterminées à la température ambiante selon la norme DIN ISO 7619-1,
**caractérisé en ce que**
• le premier mélange de caoutchouc et le deuxième mélange de caoutchouc présentent, dans l'état vulcanisé, des valeurs de contrainte, déterminées sous 300 % d'allongement à la température ambiante selon la norme DIN 53504, qui diffèrent l'une de l'autre de 2 % au maximum, dans lequel la valeur respectivement plus petite est admise comme 100 %.

2. Pneumatique de véhicule selon la revendication 1, **caractérisé en ce que**, dans l'état vulcanisé, le premier mélange de caoutchouc présente une dureté Shore A de 41 Shore A à 65 Shore A et le deuxième mélange de caoutchouc présente une dureté Shore A de 49 Shore A à 76 Shore A.

3. Pneumatique de véhicule selon au moins une des revendications précédentes, **caractérisé en ce que** le premier mélange de caoutchouc et le deuxième mélange de caoutchouc présentent respectivement une valeur de contrainte de 3 MPa à 7 MPa, déterminée sous 300 % d'allongement à la température ambiante selon la norme DIN 53504.

4. Pneumatique de véhicule selon au moins une des revendications précédentes, **caractérisé en ce que** le premier mélange de caoutchouc et le deuxième mélange de caoutchouc présentent respectivement une valeur de contrainte comprise entre 7 MPa et 13 MPa, déterminée sous 300 % d'allongement à la température ambiante selon la norme DIN 53504.

5. Pneumatique de véhicule selon au moins une des revendications précédentes, **caractérisé en ce qu'**à l'intérieur de la partie de bande de roulement (6), la face de séparation (12) entre la première couche (8) et la deuxième couche (9) présente un angle d'inclinaison moyen (13) par spire de -80° à 80° par rapport à la direction radiale rR du pneumatique de véhicule, **en ce que** le rapport du volume de la première couche (8) par rapport au volume de la deuxième couche (9) par spire vaut 1:1 à 10:1 et/ou **en ce que** l'épaisseur de section transversale moyenne (14) par spire de la première couche (8) et/ou l'épaisseur de section transversale moyenne (15) par spire de la deuxième couche (9) vaut 0,5 mm à 5 mm, de préférence 0,5 mm à 1 mm.

6. Pneumatique de véhicule selon au moins une des revendications précédentes, **caractérisé en ce que** la bande de roulement (1) présente dans une ou dans les deux région(s) d'épaulement (5) une partie de bande de roulement (6) et axialement à l'intérieur par rapport à la partie de bande de roulement (6) (6) une autre partie (16) de la bande de roulement (1) disposée radialement à l'extérieur, et **en ce que** la densité volumique du deuxième mélange de caoutchouc dans l'autre partie (16) est inférieure à la densité volumique du deuxième mélange de caoutchouc dans la partie de bande de roulement (6), de préférence la densité volumique du deuxième mélange de caoutchouc dans l'autre partie (16) est égale à 0.

7. Pneumatique de véhicule selon au moins une des revendications précédentes, **caractérisé en ce que** l'angle d'inclinaison moyen (13) par spire, que la face de séparation (12) entre la première couche (8) et la deuxième couche (9) de la bande de matière forme avec la direction radiale rR, varie à l'intérieur de la bande de roulement (6) dans la direction axiale aR, de préférence **en ce que** l'angle d'inclinaison moyen (13) par spire augmente en valeur du côté axialement intérieur au côté axialement extérieur.

8. Pneumatique de véhicule selon au moins une des revendications précédentes, **caractérisé en ce que** la bande de roulement (1) présente une partie de bande de roulement (6) dans chaque région d'épaulement (5), et **en ce que** les deux parties de bande de roulement (6) diffèrent par le signe de leurs angles d'inclinaison moyens (13) par spire, que la face de séparation (12) entre la première couche (8) et la deuxième couche (9) de la bande de matière respective (7) forment avec la direction radiale rR.

9. Pneumatique de véhicule selon au moins une des revendications précédentes, **caractérisé en ce que** la bande de matière (7) présente une troisième couche en un mélange de caoutchouc différent du premier mélange de caoutchouc et du deuxième mélange de caoutchouc.

10. Pneumatique de véhicule selon au moins la revendication 9, **caractérisé en ce que** la bande de matière (7) s'étend sur au moins 80 % de la largeur axiale, de préférence sur toute la largeur axiale, de la bande de roulement (1).

11. Procédé de fabrication d'un pneumatique de véhicule selon au moins une des revendications précédentes, dans lequel, pour former la partie de bande de roulement (6) disposée radialement à l'extérieur, on enroule une bande de matière (7) sensiblement sous forme d'hélice dans la direction périphérique du pneumatique de véhicule, dans lequel la bande de matière (7) comprend la première couche (8) et la deuxième couche (9) et dans lequel la bande de matière multicouche (7) est extrudée par co-extrusion sous la forme d'une bande de matière (7) ou est produite par découpage d'une bande de mélange multiple calandrée.
